(19) Europäisches Patentamt
European Patent Office
Office européen des brevets

(11) **EP 4 395 129 A1**

(12) **EUROPEAN PATENT APPLICATION**
published in accordance with Art. 153(4) EPC

(43) Date of publication:
**03.07.2024 Bulletin 2024/27**

(21) Application number: **22861538.1**

(22) Date of filing: **05.07.2022**

(51) International Patent Classification (IPC):
*H02J 50/90* (2016.01)   *H02J 50/10* (2016.01)
*H02J 7/00* (2006.01)   *B60C 23/04* (2006.01)

(52) Cooperative Patent Classification (CPC):
**B60C 23/04; H02J 7/00; H02J 50/10; H02J 50/90**

(86) International application number:
**PCT/KR2022/009677**

(87) International publication number:
**WO 2023/027324 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.08.2021 KR 20210112609**

(71) Applicant: **Banf Co., Ltd.**
**Seoul 06248 (KR)**

(72) Inventors:
• YOU, Sung Han
  Seoul 08740 (KR)
• KIM, Young Sun
  Gunpo-si Gyeonggi-do 15863 (KR)
• SONG, Ji Young
  Sejong 30032 (KR)

(74) Representative: **advotec.**
**Patent- und Rechtsanwaltspartnerschaft
Tappe mbB
Widenmayerstraße 4
80538 München (DE)**

(54) **SYSTEM AND METHOD FOR WIRELESSLY CHARGING TIRE SENSOR**

(57)    The present invention relates to a system and method for wirelessly charging a tire sensor and provides a method of wirelessly charging a battery of a tire sensor configured to detect a state of a vehicle tire.

[FIG. 2]

EP 4 395 129 A1

Description

[Technical Field]

The present invention relates to a system and method for wirelessly charging a tire sensor, and more particularly, to a method of wirelessly charging a battery of a tire sensor configured to detect a state of a vehicle tire.

[Background Art]

In general, in case that an air pressure in a vehicle tire is too high or too low, the tire bursts or a vehicle easily slips, which may cause a serious accident. In addition, the amount of fuel consumption increases, the fuel economy deteriorates, the lifespan of the tire is shortened, and the ride quality and braking force greatly deteriorate. A tire pressure monitoring system (TPMS) is applied as one of the safety devices mounted in a vehicle to prevent a defect of the tire.

The tire pressure monitoring system is one of the tire state detection sensors and equipped with an air pressure detection sensor. The tire pressure monitoring system detects air pressure, temperature, and the like of the tire and notify a driver of the detection result, thereby improving durability, ride quality, braking force, and the like of the tire.

That is, the tire pressure monitoring system is designed such that the detection sensor attached to the tire detects pressure, temperature, and the like of the tire and wirelessly transfers information to a driver seat, such that the driver may inspect a pressure state of the tire in real time. With the use of the safety device, it is possible to improve the durability, ride quality, and braking force of the tire, improve the fuel economy, and prevent a vehicle body from severely swaying while the vehicle travels.

The detection sensor is a device that may operate by receiving power. Because of the structural nature of the tire that continuously rotates while the vehicle travels, it is difficult to supply power to the detection sensor. Therefore, a structure in which a battery is embedded in a detection sensor is adopted.

However, it is significantly inconvenient to separate the detection sensor attached to a tire wheel in order to replace the battery of the detection sensor, and a user cannot manually replace the battery. Therefore, the battery is inevitably replaced at a maintenance center or the like, which causes location constraints and requires costs.

In order to solve the problem with the replacement of the battery of the detection sensor, there has been proposed a method of wirelessly charging the battery of the detection sensor.

However, the wireless charging method in the related art continuously or periodically and repeatedly attempts to wirelessly charge the battery without considering a battery capacity, detection sensor power consumption, a charging time, or the like, which causes a problem in that the lifespan of the battery is shortened.

Documents of related art related to the present invention include Japanese Patent Application Laid-Open No. 2006-092355 and the like.

[Disclosure]

[Technical Problem]

The present invention has been made in an effort to solve the above-mentioned problem in the related art, and an object of the present invention is to provide a method of wirelessly charging a battery provided in a detection sensor of a tire safety monitoring system.

In particular, the present invention has been made in an effort to solve a problem that a battery of a detection sensor cannot be charged in a wired manner because of the structural nature of a tire that continuously rotates while a vehicle travels. Further, the present invention has also been made in an effort to solve a problem that a method of wirelessly charging a battery is adopted and continuously or periodically and repeatedly attempts to wirelessly charge the battery without considering a battery capacity, detection sensor power consumption, a charging time, or the like, which shortens the lifespan of the battery.

The objects of the present invention are not limited to the above-mentioned objects, and other objects and advantages of the present invention, which are not mentioned above, may be clearly understood from the following descriptions.

[Technical Solution]

An embodiment of a system for wirelessly charging at least one of tire sensors according to the present invention may include: a wireless power transmission means disposed inside a tire wheel house of a vehicle or around a tire and configured to transmit wireless power to a charging region; a wireless charging means disposed on an inner surface of a tire of the vehicle and configured to receive the wireless power in a charging angle range for each rotation of the tire and charge a battery provided in a detection sensor of the tire; and a wireless power control means configured to control the wireless power transmission means to satisfy a required charging amount in consideration of the amount of consumption of the battery for one rotation of the tire.

Particularly, the wireless power transmission means may include a power transmitting part having a size adjusted to provide a charging region in which the required charging amount is satisfied in consideration of the amount of consumption of the battery for one rotation of the tire.

For example, the charging angle range may be determined on the basis of Expression 1 below,

[Expression 1]

$$\frac{a + b}{l + d} \leq \theta \leq \frac{k + b}{l}$$

in which $\Theta$ represents a charging angle, a represents a horizontal length of a coil patch, b represents a vertical length of the coil patch, l represents an outer radius of the tire, d represents a spacing distance between an outer side of the tire and the coil patch that is attached on inner side of the tire wheel house, and k represents a density of a metal mesh in the tire, and in which the charging region is a region corresponding to $2^\theta$.

Further, the wireless power control means may include: a power transmission control part configured to determine the charging angle range according to the rotation of the tire and control the wireless power transmission means to transmit the wireless power to the charging region corresponding to the charging angle range; and a detection sensor monitoring part configured to receive operation information of the detection sensor through an ECU of the vehicle.

Particularly, the wireless power control means may further include a battery management part configured to identify a battery residual amount of the detection sensor, and the power transmission control part may control wireless power transmission for charging the battery on the basis of the battery residual amount.

More particularly, the battery management part may provide battery charging information to the power transmission control part so that the battery residual amount is maintained within a preset range.

Further, the wireless power control means may control the wireless power transmission means to selectively transmit the wireless power to the charging region as the wireless charging means enters or exits the charging angle range.

In addition, an embodiment of a method of wirelessly charging a tire sensor according to the present invention may include: a charging region setting step of setting a charging region in consideration of a charging angle range according to a rotation of a tire; a wireless power transmission step of transmitting wireless power to the charging region; a wireless power receiving step of receiving wireless power from the charging region in the charging angle range according to the rotation of the tire; and a battery charging step of charging a battery of a detection sensor.

For example, the charging region setting step may include determining the charging angle range on the basis of Expression 1 below,

[Expression 1]

$$\frac{a + b}{l + d} \leq \theta \leq \frac{k + b}{l}$$

in which $\Theta$ represents a charging angle, a represents a horizontal length of a coil patch, b represents a vertical length of the coil patch, l represents an outer radius of the tire, d represents a spacing distance between an outer side of the tire and the coil patch that is attached on inner side of the tire wheel house, and k represents a density of a metal mesh in the tire, and in which the charging region is a region corresponding to $2^\theta$.

Further, the battery charging step may be repeatedly performed from the wireless power transmission step, and the method may further include: a charging requirement determination step of determining whether the battery needs to be charged by recognizing a battery residual amount of the detection sensor prior to the wireless power transmission step; and a charging maintenance determination step of determining whether to maintain the charging by recognizing the battery residual amount of the detection sensor after performing the battery charging step.

**[Advantageous Effects]**

As described above, according to the present invention, it is possible to wirelessly charge the battery provided in the detection sensor of the tire pressure monitoring system.

In particular, it is possible to solve, by using the wireless charging method, the problem that the battery of the detection sensor cannot be charged in a wired manner because of the structural nature of the tire that continuously rotates while the vehicle travels.

Further, it is possible to improve the efficiency of the battery by performing the wireless charging by collectively considering the residual amount and the charging amount of the battery.

The effects obtained by the present invention are not limited to the aforementioned effects, and other effects, which are not mentioned above, will be clearly understood by those skilled in the art from the following description.

**[Description of Drawings]**

FIG. 1 is a conceptual view illustrating a tire safety monitoring system to which the present invention is applied.
FIG. 2 is a configuration view of an embodiment of a system for wirelessly charging a tire sensor according to the present invention.

FIG. 3 is a configuration view of an embodiment of a tire detection sensor according to the present invention.

FIG. 4 is a view illustrating an example the system for wirelessly charging a tire sensor according to the present invention is applied to a vehicle.

FIG. 5 is a configuration view of an embodiment of a wireless power control means of the system for wirelessly charging a tire sensor according to the present invention.

FIG. 6 is a view illustrating an example of an operation of the wireless power control means according to the present invention.

FIG. 7 is a flowchart of an embodiment of a method of wirelessly charging a tire sensor according to the present invention.

FIGS. 8 and 9 are views illustrating an example of a charging angle range and a charging region according to the present invention.

FIGS. 10 and 11 are graphs illustrating variations of power as wireless charging is provided in a wireless charging region according to the present invention.

**[Best Mode]**

Hereinafter, exemplary embodiments of the present invention will be described in detail with reference to the accompanying drawings, but the present invention is not restricted or limited by the embodiments.

In order to describe the present invention, the operational advantages of the present invention, and the object achieved by carrying out the present invention, exemplary embodiments of the present invention will be described.

The terms used herein is used for the purpose of describing particular embodiments only and is not intended to limit the present invention. Singular expressions may include plural expressions unless clearly described as different meanings in the context. In the present application, the terms "comprises," "comprising," "includes," "including," "containing," "has," "having" or other variations thereof are inclusive and therefore specify the presence of stated features, integers, steps, operations, elements, components, and/or combinations thereof, but do not preclude the presence or addition of one or more other features, integers, steps, operations, elements, components, and/or combinations thereof.

In the description of the present invention, the specific descriptions of publicly known related configurations or functions will be omitted when it is determined that the specific descriptions may obscure the subject matter of the present invention.

The present invention provides a method of wirelessly charging a battery of a tire sensor configured to detect a state of a vehicle tire.

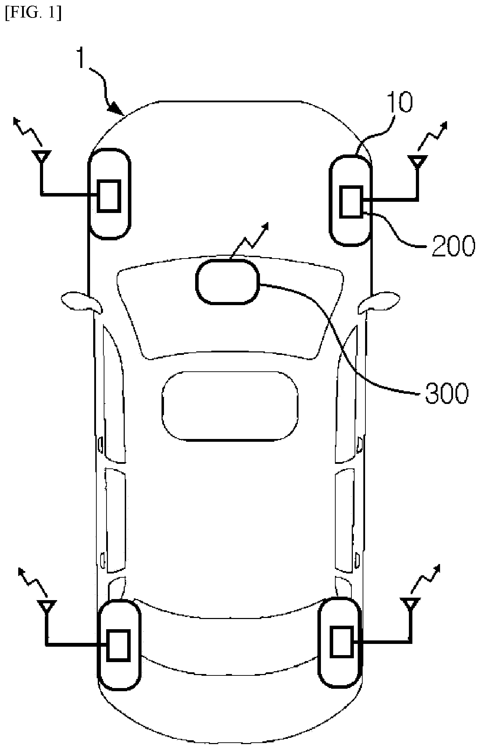

FIG. 1 is a conceptual view illustrating a tire safety monitoring system to which the present invention is applied.

The tire safety monitoring system disclosed in the present invention is provided to improve traveling safety by measuring various states of a tire of a vehicle. For example, the tire safety monitoring system may include a tire pressure monitoring system (TPMS) and may be a monitoring system for identifying various safety situations, such as a tire abrasion degree, a temperature, and a slipperiness degree as well as the tire pressure monitoring, related to the tire while the vehicle travels.

Detection sensors 200 for measuring states of tires 10 may be respectively mounted in the tires 10 of a vehicle 1. The detection sensor 200 may detect the state of the tire 10, packetize the detection information, and wirelessly transfer the packetized information.

In this case, the detection sensor 200 may include various sensors capable of measuring the states of the tire such as pressure, temperature, slipperiness, and abrasion.

A host controller 300 provided in the vehicle 1 may receive the detection information transferred wirelessly and provide the corresponding information to a driver through an instrument panel or the like of the vehicle 1. In this case, the host controller may be an electronic control unit (ECU) or the like.

The present invention may be applied to the tire safety monitoring system. In more detail, the present invention provides a wireless charging system and method for wirelessly charging a battery of a detection sensor that is one component of the tire safety monitoring system.

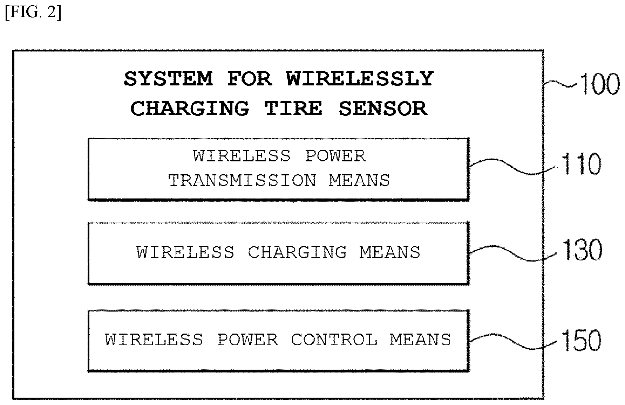

FIG. 2 is a configuration view of an embodiment of the system for wirelessly charging a tire sensor according to the present invention.

A system 100 for wirelessly charging a tire sensor according to the present invention may include a wireless power transmission means 110, a wireless charging means 130, a wireless power control means 150, and the like.

The wireless power transmission means 110 may wirelessly transmit power for charging the battery of the tire detection sensor.

To this end, the wireless power transmission means 110 may include a power transmitting part for wirelessly charging power by electromagnetic induction. In this case, the power transmitting part may be configured as a coil patch or the like disposed in a tire wheel house of a vehicle.

The wireless charging means 130 may charge the battery of the tire detection sensor by receiving wireless power provided from the wireless power transmission means 110.

In this case, the wireless charging means 130 may be configured as a device provided separately from the tire detection sensor, or the wireless charging means 130 may be configured as a part of the tire detection sensor.

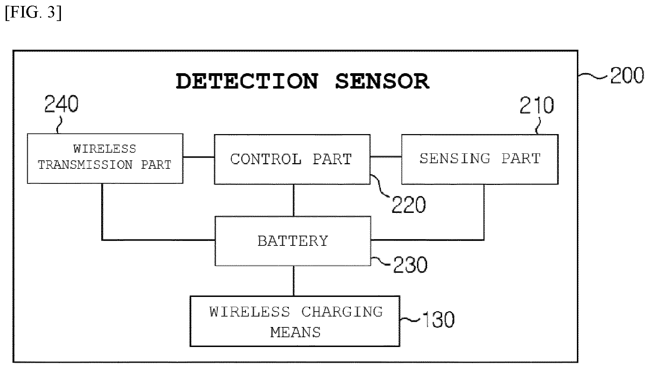

FIG. 3 related to the tire detection sensor is a configuration view of an embodiment of a tire detection sensor according to the present invention.

The detection sensor 200 may include a sensing part 210, a control part 220, a battery 230, and a wireless transmission part 240 and include the wireless charging means 130 as an internal component.

The sensing part 210 may include various sensors for measuring states of the tire such as acceleration, rotational force, air pressure, and temperature. For example, the sensing part may include sensors, such as an air pressure measurement sensor, a two-axis or three-axis acceleration sensor, or a gyro sensor, for measuring various situations that may be detected through the tire while the vehicle travels.

The control part 220 may control the sensing part 210 and provide the host controller of the vehicle with the tire state information, which is measured by the sensing part 210, through the wireless transmission part 240. Further, the control part 220 may provide the host controller with various types of state information of the detection sensor 200. For example, the control part may provide the host controller with residual amount information or the like of the battery 230.

The battery 230 may supply power for operating the components of the detection sensor 200.

The wireless transmission part 240 may transmit or receive various types of information to or from the host controller of the vehicle through wireless communication.

The wireless charging means 130 is one component of the system 100 for wirelessly charging a tire sensor according to the present invention. The wireless charging means may receive wireless power from the wireless power transmission means 110 by electromagnetic induction and charge the battery 230 with the received power. To this end, the wireless charging means 130 may include a power receiving part provided in the form of a coil and configured to receive power by electromagnetic induction.

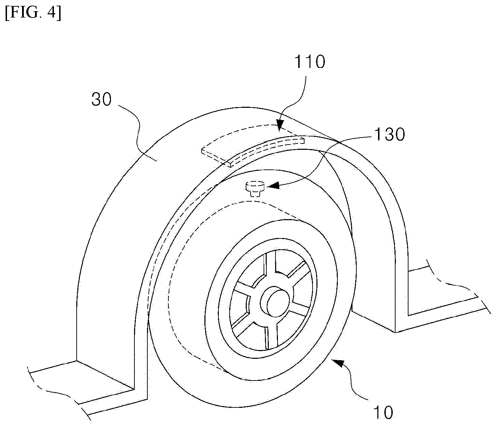

FIG. 4 is a view illustrating an example the system for wirelessly charging a tire sensor according to the present invention is applied to a vehicle.

The wireless power transmission means 110 may be disposed on an inner surface of a tire wheel house 30 of the vehicle or around a tire. More specifically, a coil patch capable of transmitting wireless power by electromagnetic induction may be mounted on the inner surface of the tire wheel house 30.

A size of the coil patch for transmitting wireless power may be adjusted to provide a charging region in which a required charging amount is satisfied in consideration of the amount of battery consumption of the detection sensor for each rotation of the tire.

Further, the wireless charging means 130 may be disposed on an inner surface of the tire 10, receive wireless power transmitted from the wireless power transmission means 110, and charge the battery of the detection sensor.

As illustrated in FIG. 4, the wireless power transmission means 110 is disposed on the inner surface of the tire wheel house 30 of the vehicle or around a tire, and the wireless charging means 130 is disposed on the inner surface of the tire 10, such that a region capable of transmitting and receiving wireless power may be restricted by the rotation of the tire 10.

That is, an angle range capable of receiving wireless power from the wireless charging means 130 is restricted by the rotation of the tire. In the present invention, this angle range is defined as a charging angle range. In addition, a region capable of transmitting power is restricted by an arrangement position, a size, and the like of the wireless power transmission means 110. In the present invention, this region is defined as a charging region.

In the present invention, the charging angle range according to the rotation of the tire may be determined, and the charging region corresponding to the charging angle range may be set, such that the wireless power may be transmitted and received. This configuration will be described below in more detail with reference to the embodiments.

The configuration of the system 100 for wirelessly charging a tire sensor according to the present invention will be continuously described with reference back to FIG. 2.

The wireless power control means 150 may control wireless power transmission of the wireless power transmission means 110.

Particularly, the wireless power control means may determine the charging angle range according to the rotation of the tire and control the wireless power transmission means 110 to transmit wireless power to the charging region corresponding to the charging angle range.

In this case, the wireless power control means 150 may determine the charging angle range in consideration of a size of the power transmitting part of the wireless power transmission means 110, an outer radius of the tire, and a spacing distance between the power transmitting part and the power receiving part of the wireless charging means 130.

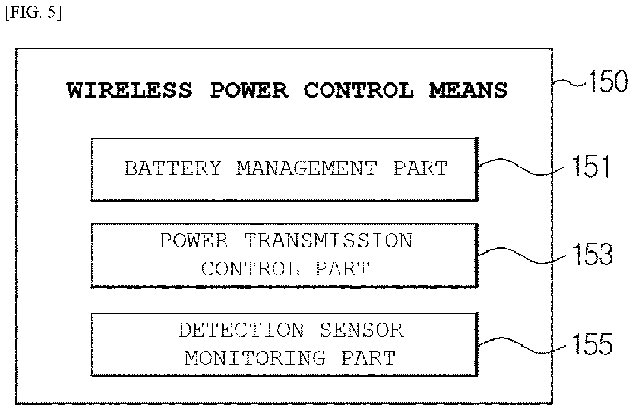

FIG. 5 related to the wireless power control means 150 is a configuration view of an embodiment of the wireless power control means of the system for wirelessly charging a tire sensor according to the present invention.

The wireless power control means 150 may include a battery management part 151, a power transmission control part 153, a detection sensor monitoring part 155, and the like.

The battery management part 151 may identify the battery residual amount of the detection sensor. The information on the battery residual amount of the detection sensor may be transferred to the host controller. The battery management part 151 may identify the battery residual amount of the detection sensor through the host controller and the like.

Further, on the basis of the battery residual amount of the detection sensor, the battery management part 151 may determine whether the battery needs to be charged, and the battery management part 151 may identify a wireless charging situation and determine whether to maintain or end the battery charging.

Particularly, the battery management part 151 may set a range in which the battery residual amount needs to be maintained in consideration of efficiency of the battery. On the basis of the residual amount maintaining range, the battery management part may determine whether the battery needs to be charged or determine whether to maintain or end the charging during the wireless charging.

The power transmission control part 153 may determine the charging angle range according to the rotation of the tire and control the wireless power transmission means 110 to transmit wireless power to the charging region corresponding to the charging angle range.

For example, the power transmission control part 153 may set the charging region by determining the charging angle range on the basis of Expression 1 below.

[Expression 1]

$$\frac{a+b}{l+d} \leq \theta \leq \frac{k+b}{l}$$

Here, Θ represents a charging angle, a represents a horizontal length of the coil patch, b represents a vertical length of the coil patch, l represents an outer radius of the tire, d represents a spacing distance between an outer side of the tire and the coil patch that is attached on inner side of the tire wheel house, and k represents a density of a metal mesh in the tire.

When the charging angle Θ is determined on the basis of Expression 1, the charging region may be set to a region of $2^{\theta}$.

Particularly, the power transmission control part 153 may control the wireless power transmission for charging the battery on the basis of the battery residual amount identified by the battery management part 151. More specifically, the power transmission control part 153 may control the wireless power transmission means 110 on the basis of the result of determination by the battery management part 151 related to whether the battery needs to be charged or whether to maintain or end the charging during the charging.

The detection sensor monitoring part 155 may receive operation information of the detection sensor through the host controller of the vehicle. In this case, the host controller may be an ECU or the like of the vehicle.

Further, the detection sensor monitoring part 155 may recognize a position of the wireless charging means 130. The position information of the wireless charging means 130 may be provided from the host controller or recognized on the basis of a radio signal transmitted from the detection sensor.

The detection sensor monitoring part 155 may provide the power transmission control part 153 with the recognized position information of the wireless charging means 130. Therefore, the power transmission control part 153 may determine the charging angle range and set the charging region. That is, the alignment for the wireless power transmission may be performed on the basis of the position information of the wireless charging means 130 recognized by the detection sensor monitoring part 155.

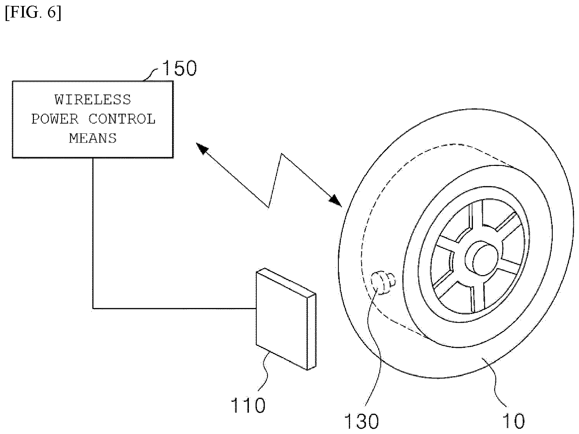

FIG. 6 is a view illustrating an example of an operation of the wireless power control means according to the present invention.

The wireless power control means 150 may perform the wireless power transmission by controlling the wireless power transmission means 110 on the basis of the battery residual amount information of the wireless charging means 130 disposed in the tire 10.

In addition, the wireless power control means 150 may recognize the position of the wireless charging means 130 according to the rotation of the tire 10 and provide the power transmission control part 153 with the recognized position, thereby determining the charging angle range and setting the charging region.

The system for wirelessly charging a tire sensor according to the present invention, which has been described above, may efficiently wirelessly charge the battery of the tire detection sensor.

Further, the present invention provides a method of wirelessly charging a tire sensor by using the system for wirelessly charging a tire sensor according to the present invention described above.

Hereinafter, the method of wirelessly charging a tire sensor according to the present invention will be described with reference to the embodiment of the system for wirelessly charging a tire sensor according to the present invention described above.

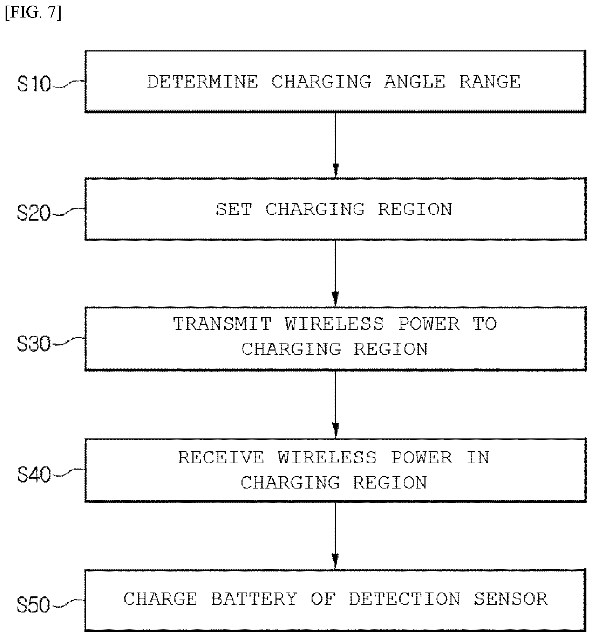

FIG. 7 is a flowchart of an embodiment of the method of wirelessly charging a tire sensor according to the present invention.

The wireless power control means 150 may determine the charging angle range according to the rotation of the tire (S10) and setting the charging region (S20).

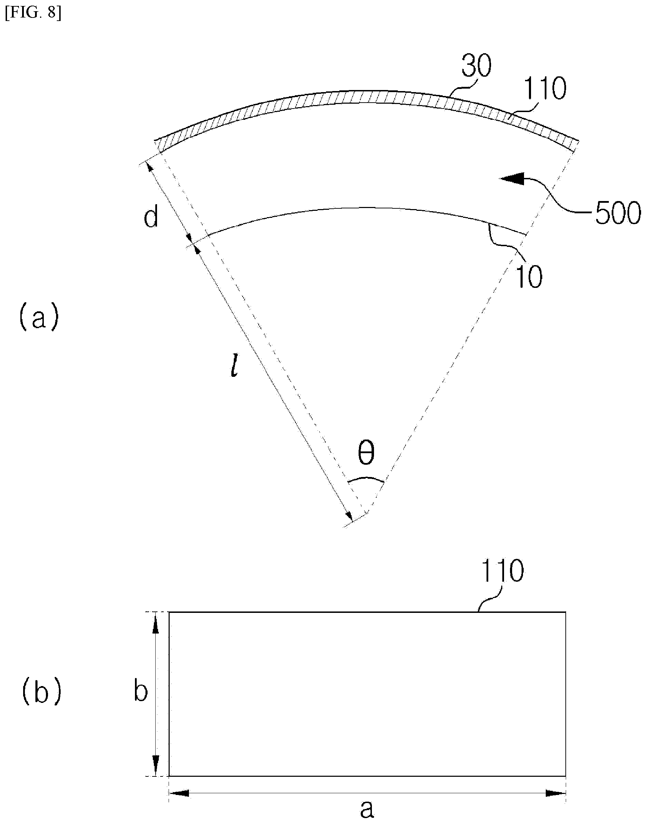

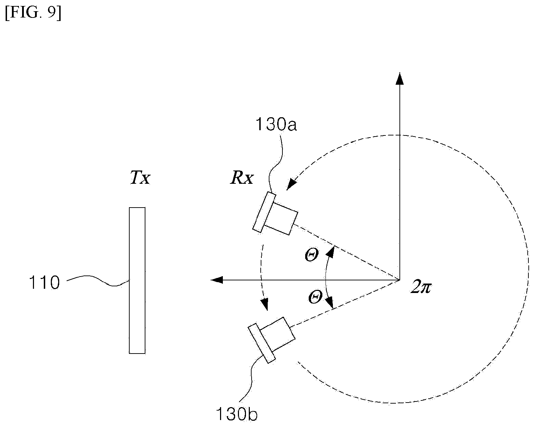

Regarding the process of determining the charging angle range and setting the charging region, FIGS. 8 and 9 are views illustrating an example of the charging angle range and the charging region according to the present invention.

As illustrated in FIG. 8, it is assumed that the outer radius of the tire 10 from the central portion to the outer portion of the tire 10 is l, the coil patch of the wireless power transmission means 110 disposed on the inner surface of the tire wheel house 30 or around a tire has the horizontal length of a and the vertical length of b, and the spacing distance between the outer side of the tire 10 and the inner side of the tire wheel house 30 is d.

As illustrated in FIG. 9, when the tire rotates, the wireless charging means also rotates from the wireless charging means 130a at a first position to the wireless charging means 130b at a second position while corresponding to the wireless power transmission means 110.

As described above, the charging angle may be restricted by the rotation of the wireless charging means 130 according to the rotation of the tire, and the angle at which the wireless charging means 130 may charge the battery may be a range of $2\theta$ on the basis of the arrangement position of the wireless power transmission means 110.

That is, the region corresponding to the charging angle range $2\theta$ may be set to the charging region.

The wireless power control means 150 may determine the charging angle range and set the charging region on the basis of the charging angle range. The wireless power control means may set the charging region by determining the charging angle on the basis of Expression 1 below.

[Expression 1]

$$\frac{a+b}{l+d} \leq \theta \leq \frac{k+b}{l}$$

Here, $\Theta$ represents the charging angle, a represents the horizontal length of the coil patch, b represents the vertical length of the coil patch, l represents the outer radius of the tire, d represents the spacing distance between the outer side of the tire and the coil patch that is attached on inner side of the tire wheel house, and k represents the density of the metal mesh in the tire. The charging region may be set to $2\theta$.

In FIG. 8, a charging region 500 may be set to correspond to the charging angle range $2\theta$.

When the charging region is set, the wireless power control means 150 may perform the wireless power transmission in the charging region by controlling the wireless power transmission means 110 (S30). The wireless charging means 130 may receive wireless power in the charging angle range corresponding to the charging region while rotating in accordance with the rotation of the tire (S40).

Further, the wireless charging means 130 may charge the battery of the detection sensor with the received power (S50).

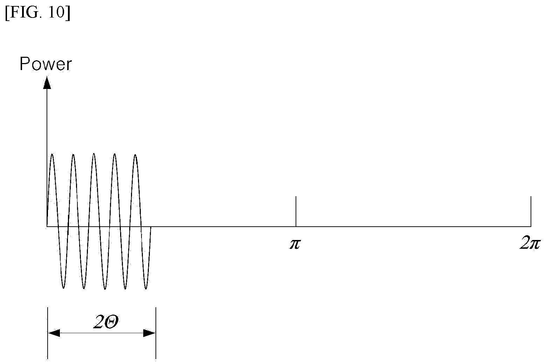

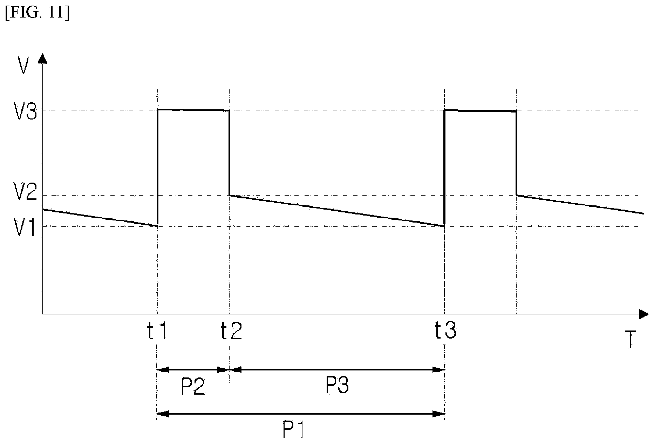

As described above, the battery of the detection sensor may be charged by the method of wirelessly charging a tire sensor according to the present invention. FIGS. 10 and 11 are graphs illustrating variations of power as wireless charging is provided in a wireless charging region according to the present invention.

As described with reference to FIG. 9, the wireless power transmission may be performed in the charging region corresponding to the charging angle range $2\theta$ according to the rotation of the tire. Therefore, as illustrated in FIG. 10, the wireless charging means 130 may receive the wireless power in the charging angle range $2\theta$.

As described above, the battery of the detection sensor may be charged with the received power. The process of charging and consuming the battery will be described with reference to the graph illustrated in FIG. 11.

A time section corresponding to one rotation of the tire is t1 to t3, a time section for performing wireless charging is t1 to t2, and a time section for consuming the battery while departing from the charging angle range is t2 to t3.

The battery may be charged with a charging voltage of V3 in the charging angle range, and thus the residual voltage amount of the battery may increase to V2. Further, when the detection sensor consumes power of the battery while departing from the charging angle range, the battery residual amount may decrease to V1.

The variation of the power of the battery may occur for one rotation of the tire, and the process of charging the battery and consuming the residual amount may be repeatedly performed for each rotation of the tire, such that the battery residual amount may be continuously maintained within a predetermined level range.

Further, in case that the battery is fully charged or the battery residual amount decreases to a level equal to or lower than a predetermined level, the efficiency and lifespan of the battery deteriorate. Therefore, in the present invention, the charging process may be performed in consideration of the properties of the battery.

The wireless power control means 150 may recognize the battery residual amount of the detection sensor and determine whether the battery needs to be charged. In case that the residual amount remains at a level equal to or higher than the predetermined level in consideration of the properties of the battery, the wireless charging is not performed.

In case that the battery residual amount decreases to a level equal to or lower than the predetermined level, the wireless power control means 150 wirelessly charge the battery of the detection sensor by controlling the wireless power transmission means 110.

In addition, in a situation in which the battery of the detection sensor is wirelessly charged, the wireless power control means 150 may recognize the charging amount of the battery and determine whether to continuously maintain the wireless charging or whether to end the wireless charging because the battery residual amount reaches the predetermined level.

Further, on the basis of the determination result, the wireless power control means 150 may consistently maintain the wireless charging or end the wireless charging by controlling the wireless power transmission means 110.

As described above, according to the present invention, it is possible to wirelessly charge the battery provided in the detection sensor of the tire safety monitoring system.

In particular, it is possible to solve, by using the wireless charging method, the problem that the battery of the detection sensor cannot be charged in a wired manner because of the structural nature of the tire that continuously rotates while the vehicle travels.

Further, it is possible to improve the efficiency of the battery by performing the wireless charging by collectively considering the residual amount and the charging amount of the battery.

The above description is simply given for illustratively describing the technical spirit of the present invention, and those skilled in the art to which the present invention pertains will appreciate that various changes and modifications are possible without departing from the essential characteristic of the present invention. Therefore, the embodiments of the present invention are provided for illustrative purposes only but not intended to limit the technical concept of the present invention. The technical spirit of the present invention is not limited thereto. The protective scope of the present invention should be construed based on the following claims, and all the technical spirit in the equivalent scope thereto should be construed as falling within the scope of the present invention.

<Explanation of Reference Numerals and Symbols>

    100: System for wirelessly charging tire sensor
    110: Wireless power transmission means
    130: Wireless charging means
    150: Wireless power control means
    151: Battery management part
    153: Power transmission control part
    155: Detection sensor monitoring part

**Claims**

1. A system for wirelessly charging at least one of tire sensors, the system comprising:

    a wireless power transmission means disposed inside a tire wheel house of a vehicle or around a tire and configured to transmit wireless power to a charging region;
    a wireless charging means disposed on an inner surface of a tire of the vehicle and configured to receive the wireless power in a charging angle range for each rotation of the tire and charge a battery provided in a detection sensor of the tire; and
    a wireless power control means configured to control the wireless power transmission means to satisfy a required charging amount in consideration of the amount of consumption of the battery for one rotation of the tire.

2. The system of claim 1, wherein the wireless power transmission means includes a power transmitting part having a size adjusted to provide a charging region in which the required charging amount is satisfied in consideration of the amount of consumption of the battery for one rotation of the tire.

3. The system of claim 2, wherein the charging angle range is determined on the basis of Expression 1 below,

[Expression 1]

$$\frac{a+b}{l+d} \leq \theta \leq \frac{k+b}{l}$$

wherein $\Theta$ represents a charging angle, a represents a horizontal length of a coil patch, b represents a vertical length of the coil patch, l represents an outer radius of the tire, d represents a spacing distance between an outer side of the tire and the coil patch that is attached on inner side of the tire wheel house, and k represents a density of a metal mesh in the tire, and
wherein the charging region is a region corresponding to $2^{\theta}$.

4. The system of claim 1, wherein the wireless power control means comprises:

    a power transmission control part configured to determine the charging angle range according to the rotation of the tire and control the wireless power transmission means to transmit the wireless power to the charging region corresponding to the charging angle range; and
    a detection sensor monitoring part configured to receive operation information of the detection sensor through an ECU of the vehicle.

5. The system of claim 4, wherein the wireless power control means further comprises a battery management part configured to identify a battery residual amount of the detection sensor, and
wherein the power transmission control part controls wireless power transmission for charging the battery on the basis of the battery residual amount.

6. The system of claim 5, wherein the battery management part provides battery charging information to the power transmission control part so that the battery residual amount is maintained within a preset range.

7. The system of claim 1, wherein the wireless power control means controls the wireless power transmission means to selectively transmit the wireless power to the charging region as the wireless charging means enters or exits the charging angle range.

8. A method of wirelessly charging a tire sensor, the method comprising:

a charging region setting step of setting a charging region in consideration of a charging angle range according to a rotation of a tire;
a wireless power transmission step of transmitting wireless power to the charging region;
a wireless power receiving step of receiving wireless power from the charging region in the charging angle range according to the rotation of the tire; and
a battery charging step of charging a battery of a detection sensor.

9. The method of claim 8, wherein the charging region setting step comprises determining the charging angle range on the basis of Expression 1 below,

[Expression 1]

$$\frac{a + b}{l + d} \le \theta \le \frac{k + b}{l}$$

wherein $\Theta$ represents a charging angle, a represents a horizontal length of a coil patch, b represents a vertical length of the coil patch, l represents an outer radius of the tire, d represents a spacing distance between an outer side of the tire and the coil patch that is attached on inner side of the tire wheel house, and k represents a density of a metal mesh in the tire, and
wherein the charging region is a region corresponding to $2^{\theta}$.

10. The method of claim 8, wherein the battery charging step is repeatedly performed from the wireless power transmission step, and
wherein the method further comprises:

a charging requirement determination step of determining whether the battery needs to be charged by recognizing a battery residual amount of the detection sensor prior to the wireless power transmission step; and
a charging maintenance determination step of determining whether to maintain the charging by recognizing the battery residual amount of the detection sensor after performing the battery charging step.

[FIG. 1]

[FIG. 2]

| SYSTEM FOR WIRELESSLY CHARGING TIRE SENSOR | ~100 |
| --- | --- |
| WIRELESS POWER TRANSMISSION MEANS | 110 |
| WIRELESS CHARGING MEANS | 130 |
| WIRELESS POWER CONTROL MEANS | 150 |

[FIG. 3]

[FIG. 4]

[FIG. 5]

WIRELESS POWER CONTROL MEANS ~150

BATTERY MANAGEMENT PART 151

POWER TRANSMISSION CONTROL PART 153

DETECTION SENSOR MONITORING PART 155

[FIG. 6]

EP 4 395 129 A1

[FIG. 7]

S10 — DETERMINE CHARGING ANGLE RANGE

S20 — SET CHARGING REGION

S30 — TRANSMIT WIRELESS POWER TO CHARGING REGION

S40 — RECEIVE WIRELESS POWER IN CHARGING REGION

S50 — CHARGE BATTERY OF DETECTION SENSOR

16

[FIG. 8]

(a)

(b)

[FIG. 9]

[FIG. 10]

[FIG. 11]

## INTERNATIONAL SEARCH REPORT

| International application No. |
| --- |
| **PCT/KR2022/009677** |

**A. CLASSIFICATION OF SUBJECT MATTER**

**H02J 50/90**(2016.01)i; **H02J 50/10**(2016.01)i; **H02J 7/00**(2006.01)i; **B60C 23/04**(2006.01)i

According to International Patent Classification (IPC) or to both national classification and IPC

**B. FIELDS SEARCHED**

Minimum documentation searched (classification system followed by classification symbols)

H02J 50/90(2016.01); B60C 23/02(2006.01); B60C 23/04(2006.01); G08C 17/02(2006.01); H02J 50/10(2016.01); H02J 50/70(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무선 충전(wireless charging), 타이어(tire), 센서(sensor), 각도(angle)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2018-0023862 A (AMOSENSE CO., LTD.) 07 March 2018 (2018-03-07) See paragraphs [0004], [0025]-[0035] and [0049], and figure 1. | 1 |
| A | | 2-10 |
| Y | WO 2017-155035 A1 (HITACHI MAXELL, LTD.) 14 September 2017 (2017-09-14) See paragraphs [0019]-[0026], and figures 1-2. | 1 |
| DY | JP 2006-092355 A (NISSAN MOTOR CO., LTD.) 06 April 2006 (2006-04-06) See paragraphs [0003]-[0014], and figures 1-3. | 1 |
| A | JP 2007-062735 A (HONDA MOTOR CO., LTD.) 15 March 2007 (2007-03-15) See paragraphs [0011]-[0017], and figure 1. | 1-10 |

☑ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 October 2022** | **17 October 2022** |

| Name and mailing address of the ISA/KR | Authorized officer |
| --- | --- |
| **Korean Intellectual Property Office** Government Complex-Daejeon Building 4, 189 Cheongsa-ro, Seo-gu, Daejeon 35208 | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/009677** |

**C.    DOCUMENTS CONSIDERED TO BE RELEVANT**

| Category* | Citation of document, with indication, where appropriate, of the relevant passages | Relevant to claim No. |
| --- | --- | --- |
| PX | KR 10-2351949 B1 (BANF CO., LTD.) 18 January 2022 (2022-01-18)<br>See entire document.<br>(This document is a published earlier application that serves as a basis for claiming priority of the present international application.) | 1-10 |

Form PCT/ISA/210 (second sheet) (July 2022)

**INTERNATIONAL SEARCH REPORT**
Information on patent family members

International application No.

**PCT/KR2022/009677**

| Patent document cited in search report | | | Publication date (day/month/year) | Patent family member(s) | | | Publication date (day/month/year) |
|---|---|---|---|---|---|---|---|
| KR | 10-2018-0023862 | A | 07 March 2018 | WO | 2018-038572 | A1 | 01 March 2018 |
| WO | 2017-155035 | A1 | 14 September 2017 | CN | 107710490 | A | 16 February 2018 |
| | | | | EP | 3319161 | A1 | 09 May 2018 |
| | | | | EP | 3332993 | A1 | 13 June 2018 |
| | | | | EP | 3355398 | A1 | 01 August 2018 |
| | | | | JP | 6775500 | B2 | 28 October 2020 |
| | | | | JP | 6921739 | B2 | 18 August 2021 |
| | | | | JP | 7088671 | B2 | 21 June 2022 |
| | | | | US | 10647170 | B2 | 12 May 2020 |
| | | | | US | 2018-0191022 | A1 | 05 July 2018 |
| | | | | US | 2018-0244115 | A1 | 30 August 2018 |
| | | | | US | 2018-0309139 | A1 | 25 October 2018 |
| | | | | WO | 2017-002981 | A1 | 05 January 2017 |
| | | | | WO | 2017-169684 | A1 | 05 October 2017 |
| JP | 2006-092355 | A | 06 April 2006 | None | | | |
| JP | 2007-062735 | A | 15 March 2007 | JP | 4204612 | B2 | 07 January 2009 |
| KR | 10-2351949 | B1 | 18 January 2022 | None | | | |

Form PCT/ISA/210 (patent family annex) (July 2022)

**EP 4 395 129 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006092355 A